# EUROPEAN PATENT APPLICATION

(11) **EP 2 306 235 A1**
(43) Date of publication of application: **06.04.2011**
(21) Application number: 09797922.3
(22) Date of filing: 14.07.2009
(51) Int. Cl.: G02C 13/00, G06Q 30/00

(54) **EYEGLASS LENS ORDERING TERMINAL, EYEGLASS LENS ORDER RECEIVING DEVICE, AND EYEGLASS LENS ORDERING/ORDER RECEIVING SYSTEM AND PROGRAM**

(30) Priority: 14.07.2008 JP 2008182924
(71) Applicant: Nikon-Essilor Co., Ltd., Tokyo 130-0026 (JP)
(72) Inventor: SHIMIZU Shigehiro, Tokyo 130-0026 (JP)
(74) Representative: Viering, Jentschura & Partner
(86) International application number: PCT/JP2009/062757
(87) International publication number: WO 2010/007997

(57) **Abstract**

An eyeglass lens ordering terminal has an input means that inputs first information that includes graph data corresponding to a graph that represents the optical characteristics of an eyeglass lens; a display means that has a screen that displays the graph; an editing means that edits the graph displayed on the screen; and a transmission means that transmits the first information to an order receiving device.

## Description

### TECHNICAL FIELD

The present invention relates to an eyeglass lens ordering terminal, an eyeglass lens order receiving device, and an eyeglass lens ordering/order receiving system and program.

Priority is claimed on Japanese Patent Application No. 2008-182924, filed on July 14, 2008, the content of which is incorporated herein by reference.

### BACKGROUND ART

In a conventional eyeglass lens ordering/order receiving system, the lens prescription data of the eyeglass lens user, the intended purpose, the lens shape, and the like, are input into an eyeglass lens ordering terminal that is installed at the sales outlet, and the eyeglass lens is designed based on the data that has been input (for example, refer to Patent Document 1).
[Patent Document 1] Japanese Unexamined Patent Application No. 2008-59548

However, in the art that is disclosed in Patent Document 1, since the optical characteristics and the like of the eyeglass lens are determined in accordance with the intended purpose and lens shape and the like that have been input, it is difficult for the eyeglass lens ordering party to request detailed performances of the eyeglass lens.

An object in aspects of the present invention is to provide an eyeglass lens ordering terminal, and an eyeglass lens ordering/order receiving system and program in which the eyeglass lens ordering party can freely change the data that represents the optical characteristics and is capable of ordering an eyeglass lens that meets detailed performance requirements from the ordering party.

### DISCLOSURE OF THE INVENTION

A first aspect of the present invention provides an eyeglass lens ordering terminal having: an input means that inputs first information that includes graph data corresponding to a graph that represents the optical characteristics of an eyeglass lens; a display means that has a screen that displays the graph; an editing means that edits the graph displayed on the screen; and a transmission means that transmits the first information to an order receiving device.

A second aspect of the present invention provides an eyeglass lens order receiving device having the aforementioned eyeglass lens ordering terminal, a receiving means that receives the first information from the eyeglass lens ordering terminal, and a design means that designs an eyeglass lens based on the received first information.

A third aspect of the present invention provides a program for causing a computer to execute: an operation that inputs first information that includes graph data that corresponds to a graph that represents the optical characteristics of an eyeglass lens; an operation that displays the graph based on the first information; an operation that edits the first information corresponding to the displayed graph; and an operation that transmits the first information to an order receiving device.

A fourth aspect of the present invention provides an eyeglass lens order receiving device that has a receiving portion that receives first information that includes graph data corresponding to a graph that represents the optical characteristics of an eyeglass lens from an ordering terminal; and a design portion that designs an eyeglass lens based on the received first information.

A fifth aspect of the present invention provides a program for causing a computer to execute: an operation that receives first information that includes graph data that corresponds to a graph that represents the optical characteristics of an eyeglass lens from an ordering terminal; and an operation that designs an eyeglass lens based on the received first information.

### [Advantage of the Invention]

According to aspects of the present invention, since there is an editing means that edits a graph that represents the optical characteristics, an eyeglass ordering party can freely change the graph data that represents the optical characteristics. Thereby, it is possible to order an eyeglass lens according to detailed performance requirements from the eyeglass lens ordering party.

### BRIEF DESCRIPTION OF THE DRAWINGS

FIG. 1 is a schematic diagram that shows the configuration of the eyeglass lens ordering/order receiving system according to the first embodiment.
FIG. 2 is a block diagram that shows the configuration of the eyeglass lens ordering terminal in the present embodiment.
FIG. 3 is a block diagram that shows the constitution of the eyeglass lens order receiving device in the present embodiment.
FIG. 4 is a sequence drawing that shows the procedure of the ordering/order receiving process in the present embodiment.
FIG. 5 is a schematic diagram that shows an example of a basic information input screen in the present embodiment.
FIG. 6 is a schematic drawing that shows an example of an astigmatism distribution diagram input screen in the present embodiment.
FIG. 7 is a schematic drawing that shows examples of a sample of the astigmatism distribution diagram in the present embodiment.
FIG. 8 is a schematic drawing that shows an example of the astigmatism distribution diagram input screen after the sample readout.
FIG. 9 is a schematic drawing that shows an example of the astigmatism distribution diagram input screen after editing a sample.
FIG. 10 is a schematic drawing that shows an example of the power/addition distribution diagram input screen in the present embodiment.
FIG. 11 is a schematic drawing that shows an example of the allowable error amount in the present embodiment.
FIG. 12 is a schematic drawing that shows a data formation example of the graph data of the astigmatism distribution diagram in the present embodiment.
FIG. 13 is a flowchart that shows the procedure of the eyeglass lens design process in the present embodiment.
FIG. 14 is a sequence diagram that shows the procedure of the ordering/order receiving process in the second embodiment.

### DETAILED DESCRIPTION OF THE EMBODIMENTS

Herinbelow, the embodiments of the present invention shall be described in detail with reference to the drawings.

### [First Embodiment]

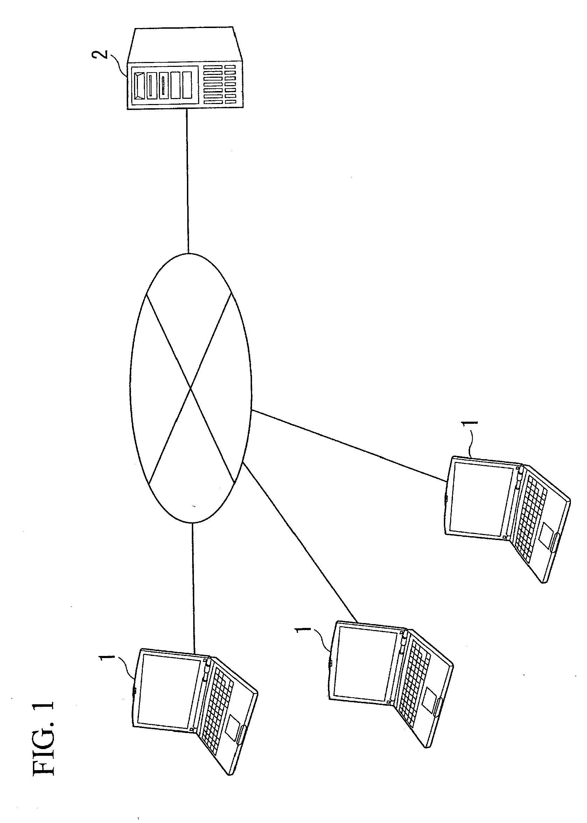

FIG. 1 is a schematic diagram that shows the configuration of the eyeglass lens ordering/order receiving system in the embodiment of the present invention.

The eyeglass lens ordering/order receiving system is constituted to include a plurality of ordering terminals (eyeglass lens ordering terminals) 1 that place an order for an eyeglass lens, and an order receiving device (eyeglass lens order receiving device) 2 that receives the order for an eyeglass lens. The ordering terminal 1 and the order receiving device 2 are connected to be able to communicate through a network. This network includes communication networks such as the Internet, an intranet, or a LAN (local area network).

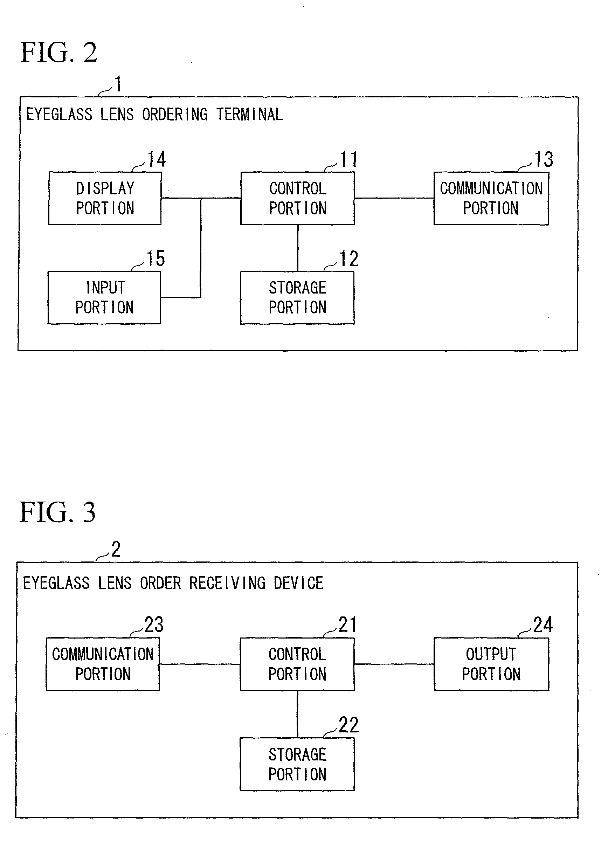

FIG. 2 is a block diagram that shows the configuration of the ordering terminal 1 in the present embodiment.

The ordering terminal 1 is for example a personal computer that is installed in an eyeglasses store etc. The ordering terminal 1 includes a control portion 11, a storage portion 12, a communication portion 13, a display portion 14, and an input portion 15.

The control portion 11 integrally controls the ordering terminal 1. The communication portion 13 communicates with the order receiving device 2 through a network. The display portion 14 is a display device, such as a CRT or a liquid crystal display, and displays the order placement screen (eyeglass lens order placement screen) for inputting order placement information (eyeglass lens order placement information) that is the information on the eyeglass lens to be ordered. The input portion 15 includes for example a mouse, a keyboard, and the like. For example, the order placement information according to the content of the order screen is inputted through the input portion 15. The storage portion 12 stores in a readable manner sample data of a distribution diagram, and information on the design limit of an eyeglass lens described later. Note that the ordering terminal 1 in the present embodiment is made to be a personal computer, but is not limited to one, and for example it may be another terminal such as mobile telephone or PDA (Personal Digital Assistant).

FIG. 3 is a block diagram that shows the constitution of the order receiving device 2 in the present embodiment.

The order receiving device 2 is a server that is installed at the lens manufacturer or the like. The order receiving device 2 includes a control portion 21, a storage portion 22, a communication portion 23, and an output portion 24.

The control portion 21 integrally controls the order receiving device 2. The communication portion 23 communicates with the ordering terminal 1 through a network. The storage portion 22 stores in a readable manner various types of data for eyeglass lens design. The output portion 24 is a display device such as a CRT or a liquid crystal display, and displays the design result of the eyeglass lens. Note that the output portion 24 may be a printer that outputs the design result of the eyeglass lens by printing it.

Next, the process procedure of the ordering/order receiving process in the eyeglass lens ordering/order receiving system shall be described.

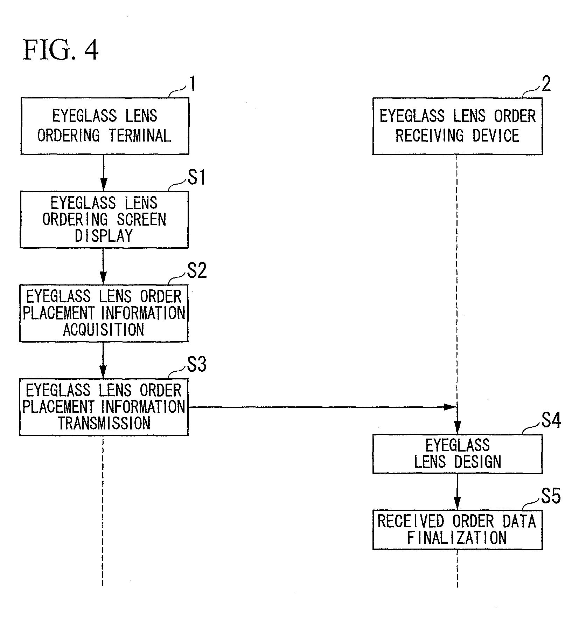

FIG. 4 is a sequence drawing that shows the procedure of the ordering/order receiving process in the present embodiment.

The process that is shown in the drawing starts when an ordering screen display request is input to the ordering terminal 1 by for example operation of the input portion 15 by the ordering party (the eyeglass lens ordering party).

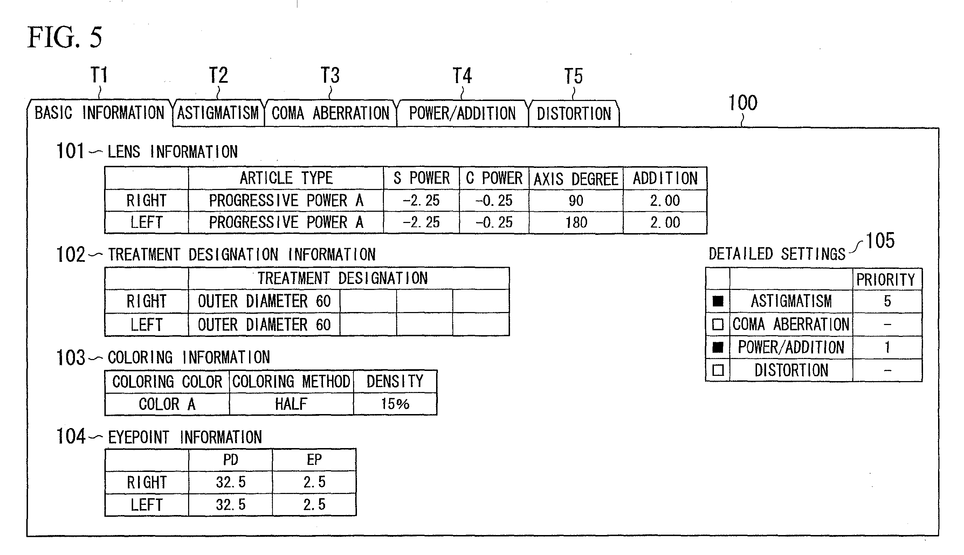

First, the ordering terminal 1 displays the ordering screen (Step 1). This ordering screen shall be described with reference to FIG. 5 to FIG. 11.

FIG. 5 is a schematic diagram that shows an example of a basic information input screen 100 in the present embodiment.

The basic information input screen 100 is displayed when the basic information tab T1 of the ordering screen is selected. In FIG. 5, in a lens information item 101 are the article type of the eyeglass lens to be ordered (for example, progressive power lens, near to intermediate-distance lens for indoor use, single focus lens, and the like), and input items related to the eyeglass lens power such as the S power that denotes the strength of the nearsightedness/farsightedness, the C power that denotes the strength of the astigmatism, the axis degree that denotes the angle at which the astigmatism occurs, and the addition that is the difference between the power of seeing far and the power of seeing near in a progressive refractive power lens. In a treatment designation information item 102, the outer diameter and thickness and the like of the eyeglass lens are designated. In a coloring information item 103, the color of the eyeglass lens is designated. In an eyepoint information item 104, the position relation of the eye and the eyeglass lens is input.

In a detailed settings item 105, graph data that represents the optical characteristics to be used in the design of the eyeglass lens are selected, and the priority thereof is set. Here, the greater the number that is set, the higher the priority. In the present embodiment, the graph data that represents the optical characteristics includes the astigmatism distribution, the coma aberration distribution, the power/addition distribution and the distortion distribution. Here, the order placement information that includes the graph data that represents the selected optical characteristics is transmitted to the order receiving device 2. In the example shown in FIG. 5, the astigmatism distribution and the power/addition distribution are selected. Also, the priority of the astigmatism distribution is set to be higher than the power/addition distribution.

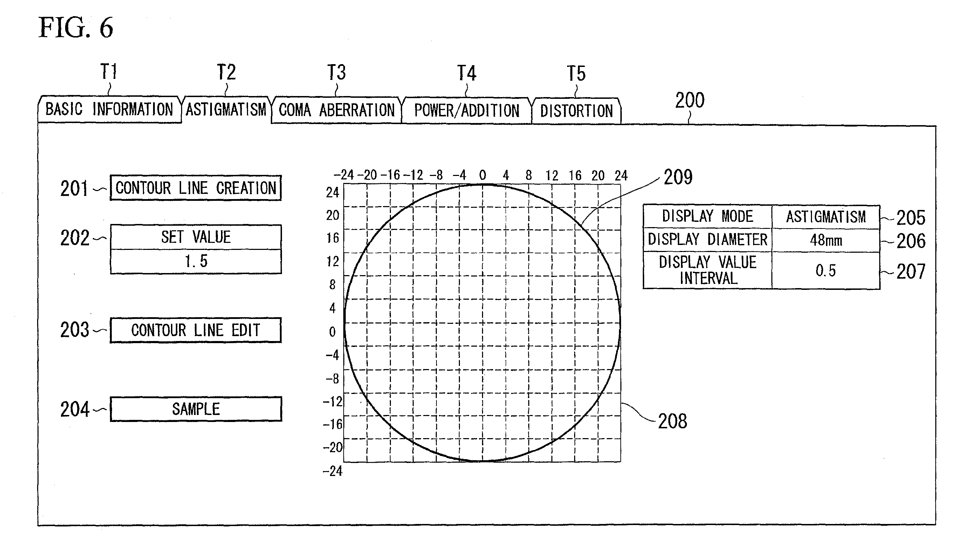

FIG. 6 is a schematic drawing that shows an example of an astigmatism distribution diagram input screen 200 in the present embodiment.

The astigmatism distribution diagram input screen 200 is shown when the astigmatism tab T2 of the ordering screen is selected. In graph 208, an astigmatism distribution diagram of the eyeglass lens or an astigmatism allowable error amount distribution diagram is drawn. The astigmatism distribution diagram is a distribution diagram of the astigmatism of an eyeglass lens. The astigmatism allowable error amount distribution diagram is a distribution diagram that represents the design allowable error amount of the value that is set in the astigmatism distribution diagram.

When a contour line creation button 201 is pressed, the control portion 11 activates a curve drawing tool for forming a new contour line in the graph 208. In a set value item 202, the value of the contour line that is formed by the contour line creation button 201 is input. When the curve drawing tool is activated, it is possible to designate the shape of the contour line by the operation of a mouse or the like of the input portion 15.

When a contour line edit button 203 is pressed, the control portion 11 activates a function to edit an existing contour line that has been drawn in the graph 208. When the edit function starts, it is possible to designate the shape of the contour line by the operation of a mouse or the like of the input portion 15.

In a display mode item 205, a selection is made to display either the astigmatism distribution diagram or the astigmatism allowable error amount distribution diagram in the graph 208. In the example that is shown in FIG. 6, the astigmatism distribution diagram has been selected. In a display diameter item 206, the diameter of the eyeglass lens 209 that is shown in the graph 208 is designated. In a display value interval item 207, the difference between adjacent contour line values is designated.

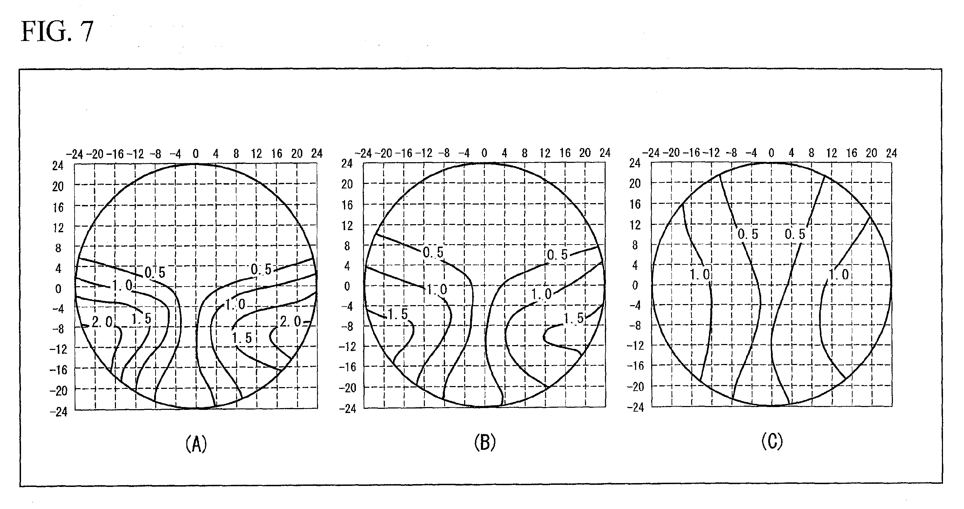

Also, when a sample button 204 is pressed, the control portion 11 displays a sample view of the astigmatism distribution diagram shown in FIG. 7 on the display portion 14.

FIG. 7 is a schematic drawing that shows examples of a sample of the astigmatism distribution diagram in the present embodiment.

In the present embodiment, it is possible to select the astigmatism distribution diagram to be edited from samples (A), (B), and (C). These sample data of these distribution diagrams are stored in the storage portion 12. The eyeglass lens of sample (A) is a type in which the clear vision region is wide and the aberration is made large. Also, the eyeglass lens of sample (B) is a type in which a balance is achieved between the clear vision region and the aberration. Also, the eyeglass lens of sample (C) is a type in which the clear vision region is narrow the aberration of the entire lens is made small.

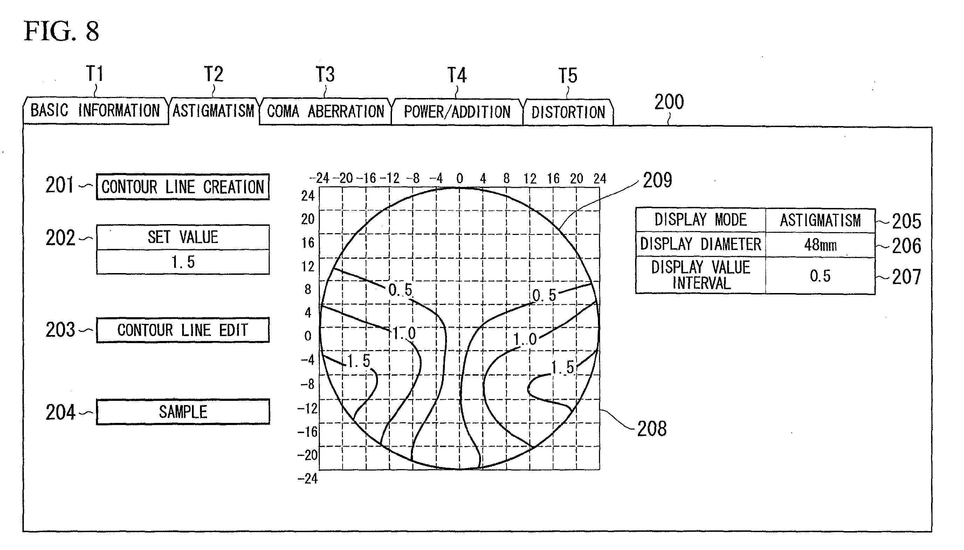

FIG. 8 is a schematic drawing that shows an example of the astigmatism distribution diagram input screen 200 after the sample readout.

The control portion 11 shows the selected sample in the graph 208 when a sample is selected in FIG. 7. In the example shown in FIG. 8, the sample (B) is selected. At this time, the values of the display diameter item 206 and the display value interval item 207 are updated to match the sample that is called out. In the example that is shown in FIG. 8, the display diameter item 206 is updated to 48 mm, and the display value interval item 207 is updated to 0.5. It is possible to edit the sample that is shown by pressing the contour line edit button 203. Note that it is possible to edit only within the design limit of the eyeglass lens that have been set in advance.

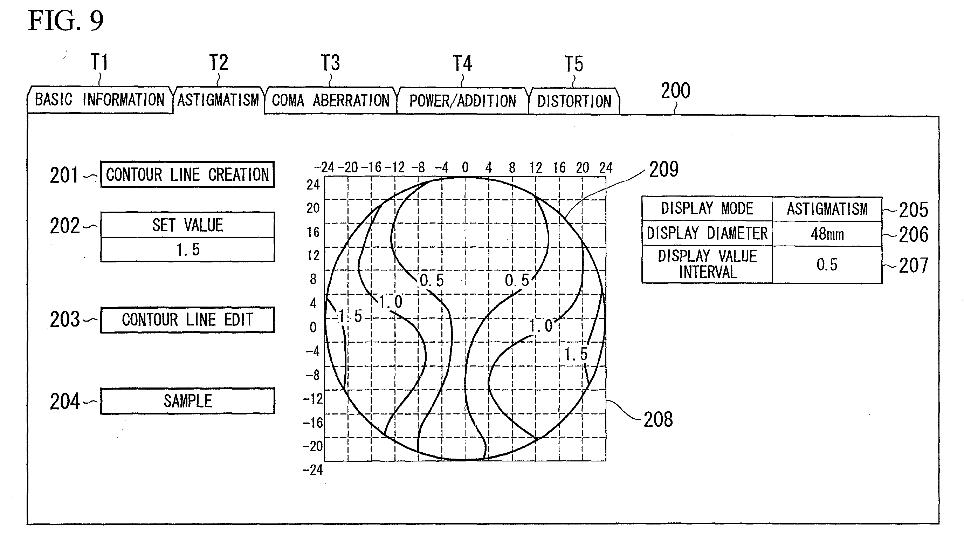

FIG. 9 is a schematic drawing that shows an example of the astigmatism distribution diagram input screen 200 after editing a sample.

In the example that is shown in this drawing, the sample (B) is edited so that the aberration becomes within 1.5 dioptre within 20 mm left or right from the center, instead of increasing the aberration of the slanting upper direction in which the frequency of use is considered to be low when mounted.

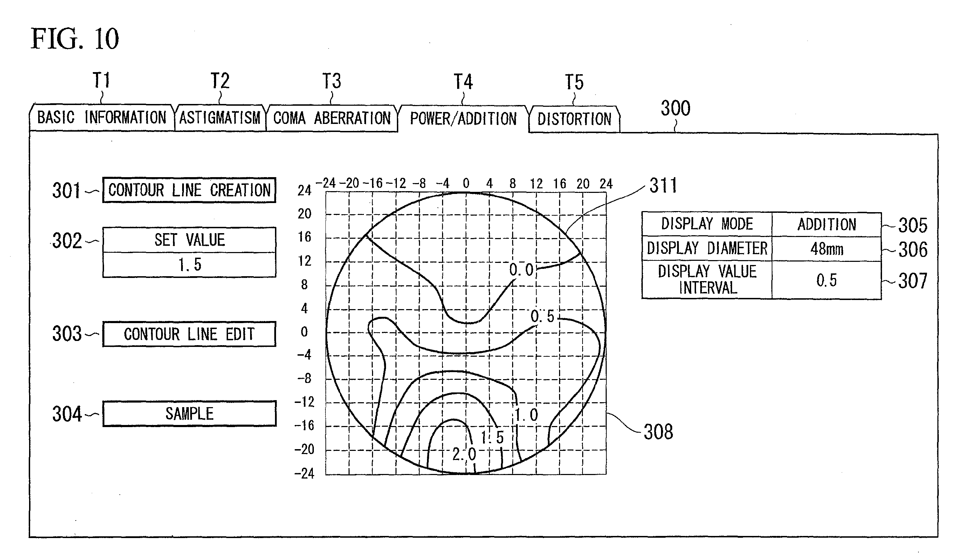

FIG. 10 is a schematic drawing that shows an example of a power/addition distribution diagram input screen 300 in the present embodiment.

The power/addition distribution diagram input screen 300 is displayed when the power/addition tab T4 of the ordering screen is selected. In the graph 308, a power chart, an addition distribution diagram or an allowable error amount distribution diagram (of the power or addition) is drawn. The power chart is a distribution diagram of the power of the eyeglass lens. Note that the power chart may be a graph that represents the relationship between the distance from the center of the eyeglass lens and the power. The addition distribution diagram is a distribution diagram of the addition of the eyeglass lens. Addition means the relative power in the case of the power of a reference point for seeing far being 0. Here, the charts that can be edited in the power/addition distribution diagram input screen 300 are either the power chart or the addition distribution diagram. In the example, the ordering party edits the addition distribution diagram in the case of the eyeglass lens article type being a progressive power lens. On the other hand, in the case of the eyeglass lens article type being a single focus lens, the power chart is edited. The allowable error amount distribution diagram (of the power or addition) is a distribution diagram that represents the design allowable error amount of the value that is set in the power chart or the addition distribution diagram.

When a contour line creation button 301 is pressed, the control portion 11 activates the curve drawing tool for creating a new contour line in the graph 308. The value of the contour line that is created by the contour line creation button 301 is input into a set value item 302. When the curve drawing tool is activated, it is possible to designate the shape of the contour line by the operation of a mouse or the like of the input portion 15.

When a contour line edit button 303 is pressed, the control portion 11 activates a function to edit an existing contour line that has been drawn in the graph 308. When the edit function starts, it is possible to designate the shape of the contour line by the operation of a mouse or the like of the input portion 15.

When a sample button 304 is pressed, the control portion 11 displays a sample of a power chart or an addition distribution diagram. When one is selected from among the plurality of samples that are displayed, the control portion 11 displays the selected sample in the graph 308.

In a display mode item 305, a selection is made to display the power chart, addition distribution diagram, or allowable error amount distribution diagram (of the power or addition). In a display diameter item 306, the diameter of the eyeglass lens 311 that is shown in the graph 308 is designated. In a display value interval item 307, the difference between adjacent contour line values is designated.

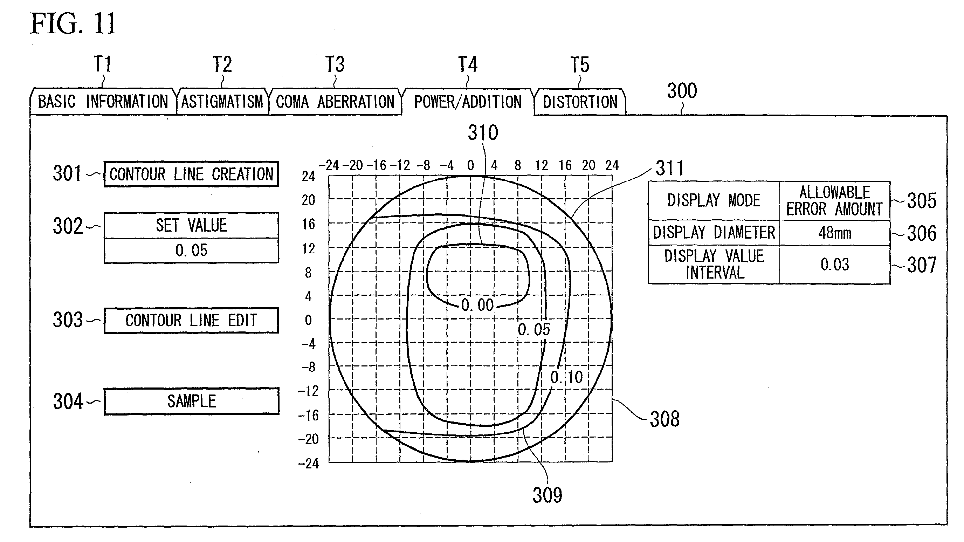

FIG. 11 is a schematic drawing that shows an example of the allowable error amount distribution diagram in the present embodiment.

In FIG. 10, when "allowable error amount" is selected in the display mode item 305, the control portion 11 displays a screen to edit the allowable error amount distribution diagram. In the graph 308, the allowable error amount distribution diagram of the addition is shown. In the example that is shown in FIG. 11, the allowable error amount of the portion 309 that is assumed to enter the eyeglass frame is made to be within 0.10, and moreover the allowable error amount of the region 310 in the direction that is directly above the line of sight is made to be 0.

Note that when a coma aberration tab T3 of the ordering screen is selected, a screen for editing the coma aberration distribution diagram of the eyeglass lens is displayed. Also, when a distortion tab T5 is selected, a screen for editing the distortion distribution diagram of the eyeglass lens is displayed. Also, it is possible to edit each distribution diagram in the ordering screen only within the design limits of the eyeglass lens that have been set in advance.

The description shall continue returning to FIG. 4.

Next, the ordering terminal 1 acquires the order placement information that is input in the ordering screen (Step S2). In the present embodiment, the order placement information includes lens information, treatment designation information, coloring information, eyepoint information, detailed setting, graph data of the astigmatism distribution diagram, graph data of the addition distribution diagram, and graph data of the allowable error amount distribution diagram of the addition.

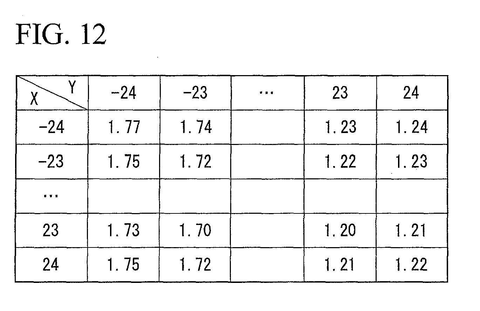

FIG. 12 is a schematic drawing that shows the data formation and data examples of the graph data of the astigmatism distribution diagram in the present embodiment.

As shown in this drawing, the graph data is two-dimensional tabular form data that consists of rows and columns. Here, an XY coordinate system is defined in which the geometric center of the eyeglass lens is made the origin, and a predetermined direction is made the X-axis direction, and a direction that is perpendicular to the X axis direction is made the Y-axis direction. The rows of the graph data show the X coordinate values, and the columns show the Y-axis coordinate values. The graph data of the astigmatism distribution diagram is a table that shows the astigmatism values in the XY coordinates of the eyeglass lens.

When a new contour line is generated in the distribution diagram of the astigmatism distribution diagram input screen 200, the control portion 11 of the ordering terminal 1 generates a value that corresponds to the shape of the contour line in the graph data. Also, when a contour line of the distribution diagram is edited in the astigmatism distribution diagram input screen 200, the control portion 11 changes a value corresponding to the shape of the contour line in the graph data. Note that in the present embodiment, as for the graph data in the eyeglass lens 209 that is shown in the graph 208, the values that are edited are numerically converted as is, but the graph data outside of the eyeglass lens 209 (the region where the contour line is not drawn) is numerically converted by calculating predicted values from the distribution trend within the eyeglass lens 209.

The description shall continue returning to FIG. 4.

Next, the ordering terminal 1 transmits the acquired order placement information to the order receiving device 2 (Step S3).

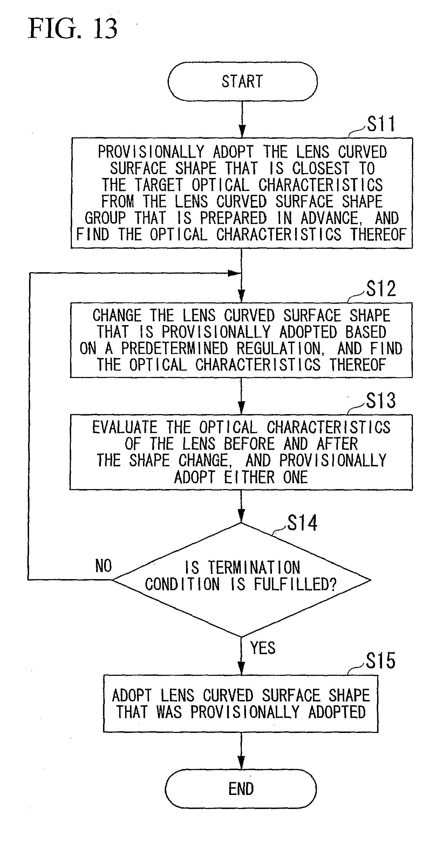

The order receiving device 2 performs eyeglass lens design based on the order placement information that is received (Step S4). Details of the eyeglass lens design shall be described with reference to FIG. 13.

FIG. 13 is a flowchart that shows the process procedure of the eyeglass lens design process in the present embodiment.

First in Step S11, the control portion 21 selects the lens curved surface shape that is closest to the target optical characteristics, from the lens curved surface shape group that is stored in advance in the storage portion 22, and finds the optical characteristics thereof. In the present embodiment, the target optical characteristics consists of graph data that represents the optical characteristics that is included in the order placement information that is received from the ordering terminal 1.

Next, in Step S12, the control portion 21 changes the lens curved surface shape that is selected based on a predetermined regulation, and finds the optical characteristics thereof.

Next, in the Step S 13, the control portion 21 evaluates the optical characteristics of the lens before and after the shape change, and provisionally adopts the lens whose optical characteristics is near the target optical characteristics.

Next, in Step S14, the control portion 21 judges whether or not the termination condition is fulfilled. The termination condition is defined as the optical characteristics becoming a state of approaching the target optical characteristics distribution by above a certain level, or of not approaching the target optical characteristics distribution beyond this. In the case of the termination condition being met, the process proceeds to Step S 15. On the other hand, in the case of the termination condition not being met, the process proceeds to Step S12.

Next, in Step S 15, the lens curved surface shape that was provisionally adopted is adopted, and the process ends.

The description shall continue returning to FIG. 4

Next, the order receiving device 2 finalizes the eyeglass lens designed in Step S4 as received order data (Step S5). When the received order data is finalized, fabrication of the eyeglass lens is started at the eyeglass lens processing plant.

In this way, according to the present embodiment, it is possible to edit the graph that represents the optical characteristics with the ordering terminal 1. Then, the eyeglass lens is designed based on the graph data showing the optical characteristics edited with the ordering terminal 1. Thereby, the ordering party can freely change the data representing the optical characteristics, and it is possible to order an eyeglass lens according to the detailed performance requirements from the ordering party.

### [Second Embodiment]

Next, the eyeglass lens ordering/order receiving system according to the second embodiment of this invention shall be described. In the present embodiment, it is possible to confirm the optical characteristics of the eyeglass lens that was designed by the ordering party, prior to fabrication of the eyeglass lens.

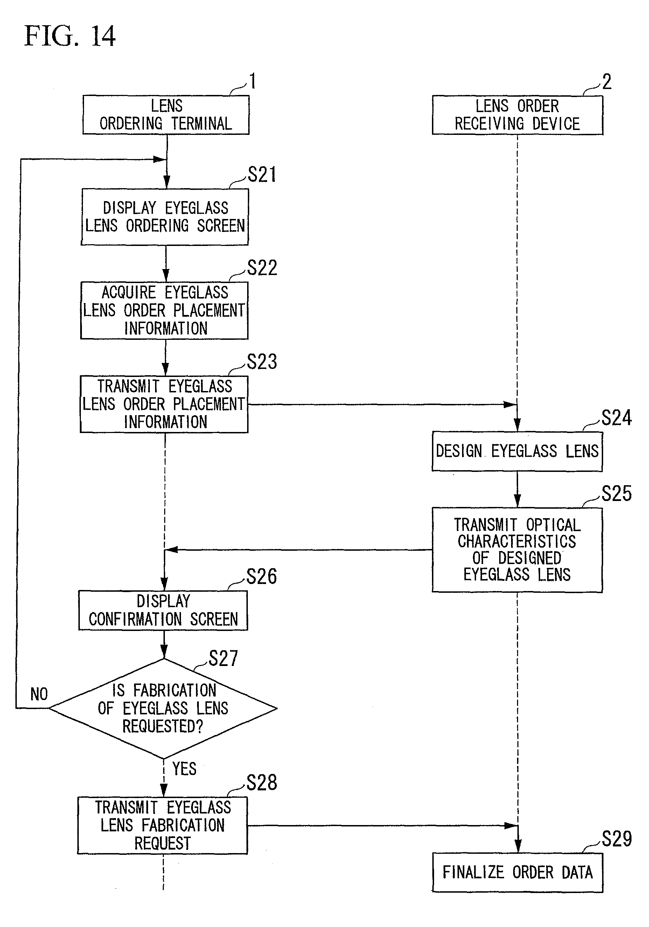

FIG. 14 is a sequence diagram that shows the procedure of the ordering/order receiving process in the present embodiment.

First, the ordering terminal 1 displays the ordering screen (Step S21). Next, the ordering terminal 1 acquires the order placement information that is input in the ordering screen (Step S22). Next, the ordering terminal 1 transmits the acquired order placement information to the order receiving device 2 (Step S23).

The order receiving device 2 performs eyeglass lens design based on the order placement information that is received (Step S24). Then, the order receiving device 2 transmits graph data that represents the optical characteristics of the designed eyeglass lens to the ordering terminal 1.

The ordering terminal 1 displays on the display portion 14 a confirmation screen that includes a graph that represents the optical characteristics of the received order (Step S26). The ordering party can confirm the graph that represents the optical characteristics of the designed eyeglass lens in the confirmation screen. Also, it is possible to select whether or not to fabricate the eyeglass lens with the eyeglass lens design in the confirmation screen.

Next, the ordering terminal 1 determines whether or not fabrication of the eyeglass lens was selected in the confirmation screen (Step S27). When fabrication of the eyeglass lens is selected in the confirmation screen, the ordering terminal 1 transmits an eyeglass lens fabrication request to the order receiving device 2 (Step S28). On the other hand, otherwise the process returns to Step S21.

When the order receiving device 2 receives the eyeglass lens fabrication request, it finalizes the eyeglass lens designed in Step S24 as received order data (Step S29).

Other constitutions are the same as the first embodiment and so descriptions thereof shall be omitted.

In this way, according to the present embodiment, it is possible to confirm with the ordering terminal 1 the graph that represents the optical characteristics of the eyeglass lens that has been designed. Also, since the fabrication of the eyeglass lens is started after obtaining the confirmation of the ordering party, it is possible to prevent inconveniences such as an eyeglass lens being fabricated with an optical characteristics not intended by the ordering party.

Also, the eyeglass lens ordering process or the eyeglass lens order receiving process may be performed by recording the program for realizing each step shown in FIG. 4 or FIG. 14 in a computer-readable recording medium. Note that "computer system" here may be one that includes an operating system or hardware such as peripheral devices.

Also, the "computer system" also includes a home page providing environment (or a display environment) in the case where a WWW system is utilized.

The "computer-readable recording medium" includes writable non-volatile memories such as a flexible disk, a magneto-optical disk, a ROM, a flash memory, portable media such as a CD-ROM, and storage devices such as hardware in a computer system.

Moreover, the "computer-readable recording medium" includes those that hold a program for a fixed time, such as a volatile memory (e.g. a dynamic random access memory (DRAM) etc.) in computer systems that become servers and clients when a program is transmitted via a communication line such as a telephone line or a network such as the Internet.

The aforementioned program may be transmitted from a computer system that stored the program in a storage device to another computer system via a transmission medium, or by transmission waves in a transmission medium. Here, a "transmission medium" for transmitting the program denotes a medium having a function of transmitting information such as a network (communication network) such as the Internet and a communication wire (communication line) such as a telephone line.

Further, it is acceptable for the program to realize some of the functions described above.

The aforementioned functions can also be realized in combination with a program already stored in the computer system, in what is known as a differential file (differential program).

In one embodiment of the present invention, the eyeglass lens ordering terminal has an input means that inputs eyeglass lens order placement information that includes graph data that represents the optical characteristics, a display means that displays a graph that represents the optical characteristics, an editing means that edits the graph that is displayed by the display means, and a transmission means that transmits the eyeglass lens order placement information to an eyeglass lens order receiving device. In other words, the eyeglass lens ordering terminal has an input means that inputs first information that includes graph data that corresponds to a graph that represents the optical characteristics of an eyeglass lens, a display means that has a screen that displays the graph, an editing means that edits the graph that is displayed on the screen, and a transmission means that transmits the first information to an order receiving device.

In the embodiment, the graph is a distribution diagram, and the editing means can have a designating means that designates the shape of the region with equivalent values on a display graph and a generating means that generates graph data of the region whose shape has been designated. Alternatively, in the embodiment, the graph is a distribution diagram, and the editing means can have a designating means that designates the shape of the region with equivalent values on the screen, and a changing means that changes the graph data corresponding to the region with the designated shape.

In the embodiment, the editing means can further have a setting means the sets the value of the region.

In the embodiment, the eyeglass lens order placement information can include a design allowable error of the graph data that represents the optical characteristics.

In the embodiment, the ordering terminal can further have a sample storing means that stores samples of the graph data that represent the optical characteristics. Alternatively, the ordering terminal can further have a sample storing means that stores sample data of the graph data.

In the embodiment, the ordering terminal additionally has a design limit storing means that stores information on the design limit of an eyeglass lens.

In the embodiment, the editing means can edit a graph within the design limit of an eyeglass lens.

In the embodiment, the ordering terminal can further have a warning means that emits a warning when the eyeglass lens order placement information exceeds the design limit of the eyeglass lens.

In the embodiment, the ordering terminal can further have a priority input means that inputs the design priority of the graph data that represents optical characteristics.

In the embodiment, the ordering terminal can further have a receiving means that receives graph data representing the optical characteristics of a designed eyeglass lens, a graph display means that displays the graph representing the received optical characteristics, a propriety input means that inputs the propriety of the graph representing the displayed optical characteristics, and a response means that answers the propriety of the graph representing the optical characteristics to a design source. In other words, in the embodiment, the ordering terminal can further have a receiving means that receives design graph data corresponding to a design graph that represents the optical characteristics of a designed eyeglass lens, a design graph display means that displays the design graph, a propriety input means that inputs the propriety of the displayed design graph, and a response means that answers the propriety of the design graph to a design source.

In the embodiment or another embodiment, the eyeglass lens order receiving device can have a receiving portion that receives from the ordering terminal first information that includes graph data corresponding to a graph that represents the optical characteristics of the eyeglass lens, and a designing portion that design the eyeglass lens based on the received first information.

In this case, the order receiving device can further have a transmitting portion that transmits to the ordering terminal the design graph data corresponding to a design graph that represents the optical characteristics of the designed eyeglass lens.

Hereinabove, one embodiment of this invention was described in detail with reference to the drawings, but specific constitutions are not limited to the above-mentioned, and various design modifications can be made within the scope of not departing from the gist of this invention.

For example, in the present embodiments, in the ordering screen it is not possible to edit each distribution diagram in a manner exceeding the design limit of the eyeglass lens, but in the case of attempting to transmit graph data that exceeds the design limit of the eyeglass lens, a warning screen may be displayed to warn the eyeglass lens ordering party.

Also, the distribution diagram that represents the optical characteristics is not limited to a contour line, and may be a distribution diagram that is color coded for each performance, so that blue is for an aberration ranging from 0 to less than 0.5, and light blue for an aberration ranging from 0.5 to less than 1.0.

### [Description of Reference Numerals]

1 eyeglass lens ordering terminal
2 eyeglass lens order receiving device
11 control portion
12 storage portion
13 communication portion
14 display portion
15 input portion
21 control portion
22 storage portion
23 communication portion
24 output portion
100 basic information input screen
200 astigmatism distribution diagram input screen
300 power/addition distribution diagram input screen

## Claims

1. An eyeglass lens ordering terminal comprising:
an input means that inputs first information that includes graph data corresponding to a graph that represents the optical characteristics of an eyeglass lens;
a display means that has a screen that displays the graph;
an editing means that edits the graph displayed on the screen; and
a transmission means that transmits the first information to an order receiving device.

2. The eyeglass lens ordering terminal according to claim 1, wherein
the graph is a distribution diagram; and
the editing means has:
a designating means that designates the shape of a region with equivalent values on the screen; and
a changing means that changes the graph data corresponding to the region with the designated shape.

3. The eyeglass lens ordering terminal according to claim 2, wherein the editing means further has a setting means that sets the value of the region.

4. The eyeglass lens ordering terminal according to any one of claims 1 to 3, wherein the first information includes an allowable error for design of the graph data.

5. The eyeglass lens ordering terminal according to any one of claims 1 to 4, further comprising a sample storing means that stores sample data of the graph data.

6. The eyeglass lens ordering terminal according to any one of claims 1 to 5, further comprising a design limit storing means that stores information on the design limit of an eyeglass lens.

7. The eyeglass lens ordering terminal according to claim 6, wherein the editing means edits the graph within the design limit of an eyeglass lens.

8. The eyeglass lens ordering terminal according to claim 6, further comprising a warning means that emits a warning in the case of the first information exceeding the design limit of an eyeglass lens.

9. The eyeglass lens ordering terminal according to any one of claims 1 to 8, further comprising a priority input means that inputs the design priority of the graph data.

10. The eyeglass lens ordering terminal according to any one of claims 1 to 9, further comprising:
a receiving means that receives design graph data corresponding to a design graph that represents the optical characteristics of a designed eyeglass lens;
a design graph display means that displays the design graph;
a propriety input means that inputs the propriety of the displayed design graph; and
a response means that answers the propriety of the design graph to a design source.

11. An eyeglass lens ordering/order receiving system comprising:
the eyeglass lens ordering terminal according to any one of claims 1 to 10; and
an eyeglass lens order receiving device that has: a receiving means that receives the first information from the eyeglass lens ordering terminal; and a design means that designs an eyeglass lens based on the received first information.

12. A program for causing a computer to execute:
an operation that inputs first information that includes graph data that corresponds to a graph that represents the optical characteristics of an eyeglass lens;
an operation that displays the graph based on the first information;
an operation that edits the first information corresponding to the displayed graph; and
an operation that transmits the first information to an order receiving device.

13. An eyeglass lens order receiving device comprising:
a receiving portion that receives first information that includes graph data corresponding to a graph that represents the optical characteristics of an eyeglass lens from an ordering terminal; and
a designing portion that designs an eyeglass lens based on the received first information.

14. The eyeglass lens order receiving device according to claim 13, further comprising a transmitting portion that transmits design graph data that corresponds to a design graph that represents the optical characteristics of a designed eyeglass lens to the ordering terminal.

15. A program for causing a computer to execute:
an operation that receives first information that includes graph data that corresponds to a graph that represents the optical characteristics of an eyeglass lens from an ordering terminal; and
an operation that designs an eyeglass lens based on the received first information.
